# EUROPÄISCHE PATENTSCHRIFT

(11) **EP 3 150 083 B1**
(45) Veröffentlichungstag und Bekanntmachung des Hinweises auf die Patenterteilung: **29.11.2017**
(21) Anmeldenummer: 15002827.2
(22) Anmeldetag: 02.10.2015
(51) Int. Cl.: A47B 47/04, F16B 12/24, F16B 12/26, F16B 12/46

(54) **EINRICHTUNG ZUM WINKLIGEN VERBINDEN UND VERRIEGELN ZWEIER PLATTEN, INSBESONDERE MÖBELPLATTEN**
DEVICE FOR ANGULARLY CONNECTING AND LOCKING TWO PANELS, IN PARTICULAR FURNITURE PANELS
DISPOSITIF DE LIAISON ANGULAIRE ET VERROUILLAGE DE DEUX PLAQUES, EN PARTICULIER PLAQUES DE MEUBLE

(43) Veröffentlichungstag der Anmeldung: 05.04.2017
(73) Patentinhaber: SWISS KRONO Tec AG, 6004 Luzern (CH)
(72) Erfinder: Fischer, Max, 99098 Erfurt (DE); Hasch, Joachim, 10317 Berlin (DE)
(74) Vertreter: Rehmann, Thorsten

(56) Entgegenhaltungen:
- WO-A1-2004/085765
- WO-A1-2012/095454
- US-A- 3 760 547

## Beschreibung

Die Erfindung betrifft eine Einrichtung mit der zwei Platten, insbesondere Möbelplatten bestehend aus einer beschichteten Holzwerkstoffplatte, insbesondere Spanplatte, winklig verbunden und verriegelt werden und die Platten die zwei gegenüberliegende Flachseiten und vier in einem Winkel, vorzugsweise im rechten Winkel, zu den Flachseiten verlaufende Schmalseiten aufweisen, eine der Platten in mindestens einer der Schmalseiten und die andere Platte in mindestens einer der Flachseiten eine Nut aufweist, in die jeweils ein Einsatzelement eingesetzt ist, das jeweils mindestens eine Hinterschneidung aufweist, und jede Hinterschneidung mit einer Lippe oder Federlippe eines Verriegelungselementes zusammenwirkt, das in die Einsatzelemente einschnappbar ausgebildet ist.

Eine solche Einrichtung ist beispielsweise aus der WO 2012/095459 A2 oder der US 3,760,547 A bekannt. Um ein Regal ohne Schraub- oder Klebverbindungen aus einzelnen Platten zusammen zu bauen ist es aus der WO 2011/151758 A2 bekannt, an zwei gegenüberliegenden Schmalseiten der Platten, die die Seitenwände bilden, aus dem Material der Platte eine geschlitzte Feder auszufräsen, die an einer ihrer Seiten mit einem Vorsprung versehen ist. Die innenliegenden Flachseiten der den Boden und den Deckel ausbildenden Platten sind in ihrem äußerem Bereich auf der Innenseite jeweils mit einer Nut versehen, in der eine Hinterschneidung ausgebildet ist, der mit dem Vorsprung an der Feder zusammenwirkt. Zum Verbinden der Platten werden die Federn in die Nuten geschoben. Durch die geschlitzte Feder drückt sich diese zusammen und wenn der Vorsprung der Feder die Hinterschneidung in der Nut umgreift, federt diese wieder zurück, so dass die Klickverbindung hergestellt wird und die Platten miteinander verbunden und zueinander verrastet sind.

Aus der WO 2012/154113 A1 ist ebenfalls eine Einrichtung zum rechtwinkligen Verbinden und Verriegeln zweier Platten bekannt. In die Flachseite der ersten Platte ist eine Rechtecknut eingebracht, die in ihrer Breite der Plattenstärke der zweiten Platten entspricht. In einer oder beiden Seitenwänden der Nut ist in einem Winkel zur Flachseite eine weitere Nut eingebracht, in der ein Federelement angeordnet ist. In der entsprechenden Flachseite der zweiten Platte ist eine Vertiefung eingefräst, in die das Federelement einschnappen kann, wenn die zweite Platte in die Nut eingeschoben wird. Die zweite Platte ist dann gegenüber der ersten Platte verriegelt.

Die EP 1 671 562 A1 offenbart ein aus mindestens zwei Möbelteilen bestehendes Möbel, bei dem ein Möbelteil eine erste Verbindungsfläche aufweist, die mit einer zweiten Verbindungsfläche eines weiteren Möbelteils verbunden werden kann, und die erste Verbindungsfläche ein erstes Verriegelungselement und die zweite Verriegelungsfläche ein zweites Verriegelungselement für eine mechanische Verriegelung aufweist. Das erste Verriegelungselement ist eine Nut und das zweite Verriegelungselement eine zu der Nut kongruent ausgestaltete Feder, die durch ineinanderstecken miteinander verrasten können. Bei dieser Verriegelungstechnik handelt es sich um eine Feder/Nut-Verbindung, wie sie bei leimlos zu verlegenden Fußbodenpaneelen bekannt sind, die im allgemeinen Sprachgebrauch als Klick-Paneele bezeichnet werden.

Die WO 2004/0857765 A1 und die DE 203 04 761 A1 beschreiben eine Einrichtung zum Verbinden und Verriegeln von Bauplatten, insbesondere Bodenpaneelen, bei der die Platten an den miteinander zu verbindenden Kanten mit einer Nut versehen sind, in der jeweils eine Hinterschneidung vorgesehen ist. Durch Einsetzen eines Kunststoffeinsatzes als Verriegelungselement in einer der Nut kann die andere Platte durch horizontales Verschieben mit dem Verriegelungselement verbunden werden, bis das Verriegelungselement mit der Hinterschneidung in der Nut verrastet, so dass die beiden Bauplatten zueinander verriegelt sind. Fußbodenpaneele und Möbelplatten sind in aller Regel Holzwerkstoffplatten, deren Oberflächen beschichtet sind (Laminatplatten). Bodenpaneele unterliegen wesentlich höheren Belastungen als Möbel. Die Trägerplatte eines Laminatpaneels besteht deshalb in aller Regel aus einer MDF- oder HDF-Platte, während für Möbelplatten eine wesentlich preiswerter herzustellende Spanplatte als Trägerplatte verwendet wird. Die Zugfestigkeit einer Spanplatte ist gegenüber einer MDF- oder HDF-Platte deutlich reduziert. Bodenpaneele werden nur sehr selten nach dem Verlegen wieder auseinander genommen in aller Regel nur zu Reparaturzwecken. Bei einem Umzug verbleiben sie vielfach im Raum. Möbel hingegen werden bei jedem Umzug zerlegt. Die Verbindung der Möbelplatten wird dabei stark beansprucht. Gerade junge Menschen, zum Beispiel Studenten, vertrauen auf preiswerte Möbel, wechseln aber relativ häufiger ihre Wohnung. Nach wenigen Umzügen kann ein Möbelstück, das mit einer Klickverbindung versehen ist, unbrauchbar sein.

Hiervon ausgehend liegt der Erfindung die Aufgabe zugrunde, eine Einrichtung zum winkligen Verbinden und Verriegeln zweier Platten, insbesondere Möbelplatten bestehend aus einer beschichten Spanplatte, so zu verbessern, dass eine hohe Festigkeit in der Verbindung entsteht, die mehrfach lösbar ist und die es gestattet, auch eine preiswerte Spanplatte als Trägerplatte zu verwenden.

Zur Problemlösung zeichnet sich eine gattungsgemäße Einrichtung dadurch aus, die Nuten im Querschnitt trapezförmig, insbesondere gleichschenklig trapezförmig und zweiteilig ausgebildet sind und die beiden Teile gelenkig miteinander verbunden sind.
Die Platten können rechtwinklig oder schräg miteinander verbunden werden, wenn beispielsweise eine Dachschräge zu berücksichtigen ist. Anstatt einer Spanplatte kann auch eine MDF-/HDF-Platte Verwendung finden.

Durch diese Ausgestaltung können die Einsatzelemente und das Verriegelungselement aus einem hochwertigen Werkstoff hergestellt werden, der gegenüber einer Spanplatte höhere Zug- und Biegefestigkeiten aufweist. Die Verbindung und Verriegelung der Platten zueinander übernehmen das Verriegelungselement und die Einsatzelemente. Da die Einsatzelemente großflächig in der Nut Halt finden, sind die Ausreißkräfte entsprechend hoch. Die Einsatzelemente können werkseitig in der Nut verklebt werden. Durch den hochwertigen Werkstoff, der durchaus Kunststoff sein kann und dadurch eine preiswerte Herstellung im Spritzguss, Extrusionsverfahren oder im 3D-Druck möglich ist, können die Möbel mehrfach auseinander- und wieder zusammengebaut werden, ohne dass die Verbindungseinrichtung Schaden nimmt. Die Lebensdauer auch preiswerter Möbel wird dadurch deutlich erhöht.

Vorzugsweise weist das Einsatzelement mindestens zwei sich gegenüberliegende Hinterschneidungen und/oder mindestens zwei hintereinander angeordnete Hinterschneidungen auf, wodurch die Haltekräfte zwischen Einsatzelement und Verriegelungselement entsprechend erhöht werden. Außerdem können die Einsatzelemente, die hierzu vorzugsweise im Querschnitt kongruent ausgebildet sind, leimlos eingesetzt werden, indem sie seitlich in die Nut eingeschoben werden und sind verliersicher darin aufgehoben. Das Einsatzelement kann von vorn über die gesamte Länge der Nut gleichzeitig in diese eingesetzt werden, so dass das seitliche Einschieben entfällt, was die automatische Fertigung erleichtert.

Um die Herstellung der Nuten zu rationalisieren, können diese vorzugsweise über die volle Länge der Flachseite und der Schmalseite ausgebildet sein. Die Nuten können dann im Durchlauf gefräst werden. Die Einsatzelemente und das Verriegelungselement können genauso lang ausgebildet sein wie die Nuten. Die Verriegelung der Platten erfolgt dann über ihre volle Länge. Es können aber auch einzelne Einsatzelement und Verriegelungselemente parallel zueinander beabstandet in die Nuten eingesetzt werden, so dass nur über Teilbereiche eine Verriegelung erfolgt, wenn dies im Einzelfall ausreichend ist. Dazu sollten dann aber mindestens zwei Einsatzelemente und zwei Verriegelungselemente vorgesehen werden.

Die Einsatzelemente sind vorzugsweise mit einer Längsnut versehen, die zwei sich gegenüberliegende Verriegelungslippen ausbildet, wobei an mindestens einer der Verriegelungslippen eine Hinterschneidung ausgeformt ist. Vorzugsweise ist an beiden Verriegelungslippen eine Hinterschneidung ausgeformt, um dadurch die Auszugskräfte zu erhöhen.

Vorzugsweise ist an jedem der gelenkig miteinander verbundenen Teile eine der Verriegelungslippen ausgebildet.

Das Verriegelungselement kann aus einem Grundkörper mit zwei sich gegenüberliegenden Oberseiten und zwei sich gegenüberliegenden Längsseiten bestehen, an dem Federlippen in Richtung der Oberseite federnd ausgebildet sind. Ein solches Verriegelungselement ist prinzipiell aus der DE 10 2004 040 723 A1 oder der DE 103 37 352 B3 für Bauplatten, insbesondere Bodenpaneele bekannt.

Die Federlippen können zu derselben Oberseite des Grundkörpers oder zu je einer der gegenüberliegenden Oberseiten federnd angeordnet sein.

Wenn die Einsatzelemente mit mehreren sich gegenüberliegenden oder hintereinander angeordneten Hinterschneidungen versehen sind, ist es vorteilhaft, an dem Verriegelungselement auch entsprechend mehr als zwei Federlippen anzuordnen.

Bei einem bevorzugten Ausführungsbeispiel kann auch mindestens eine der Verriegelungslippen des Einsatzelementes federnd ausgebildet sein. Die Lippe des Verriegelungselementes ist dann im Wesentlichen unnachgiebig auszubilden, so dass das Verriegelungselement ein im Grunde genommen starres Verriegelungselement ist, das in die Nuten eingeklickt wird. Dabei ist die Lippe dann integraler Bestandteil eines Grundkörpers des Verriegelungselementes. Für die integrale Ausbildung der Lippe ist der Grundkörper dann im Querschnitt vorzugsweise gestuft ausgebildet.

Wenn an den Längsseiten des Verriegelungselementes mindestens je eine Querfederlippe in Richtung der Längsseite federnd angeordnet ist, stützt sich diese Querfeder im verriegelten Zustand der beiden Platten am Nutgrund ab und bringt in die Verbindungsstelle eine Spannkraft ein, die die Lippe oder Federlippen fest an die für sie vorgesehenen Hinterschneidungen andrückt.

Die Querfederlippen können sich in dieselbe oder in entgegen gerichtete Richtungen erstrecken. Damit ist gemeint, dass ihre freien Enden in entgegen gesetzte Richtungen weisen.

Um die Positionierung der miteinander zu verbindenden Holzwerkstoffplatten zu vereinfachen kann zusätzlich zu den Nuten jede Platte eine Bohrung aufweisen und die sich gegenüberliegenden Bohrungen können mit einem einzigen Dübel verschlossen werden. Zusätzlich zur Verbesserung der Positionierung kann der Dübel, der vorzugsweise ein Holzdübel ist, Lasten abfangen. Die Bohrung kann unterhalb der Nuten angeordnet werden. Ist die Nut nicht durchgängig, sondern wenn eine Mehrzahl kürzerer Nuten parallel nebeneinander vorgesehen sind, können die Bohrungen auch zwischen den Nuten vorgesehen sein.

Mit Hilfe einer Zeichnung sollen Ausführungsbeispiele der Erfindung nachfolgend näher beschrieben werden. Es zeigen:
- Figur 1.1: - eine schematische Seitenansicht eines ersten Paneels;
- Figur 1.2: - eine schematische Ansicht eines zweiten Paneels;
- Figur 2: - zwei aneinander angrenzende Paneele mit nicht erfindungsgemäß ausgestalteten Einsatzelementen im Teilquerschnitt;
- Figur 3: - das Verriegelungselement für die Verbindung nach Figur 2;
- Figur 4: - zwei aneinander angrenzende Paneele mit nicht erfindungsgemäß ausgestalteten Einsatzelementen im Teilquerschnitt, in einem zweiten Ausführungsbeispiel;
- Figur 5: - das Verriegelungselement für die Verbindung nach Figur 4;
- Figur 6.1: - die Ansicht eines erfindungsgemäßen Einsatzelementes;
- Figur 6.2: - das Einsatzelement nach Figur 6.1 in einer anderen Funktionsstellung;
- Figur 6.3: - eine perspektivische Darstellung des Einsatzelementes nach Figur 6.1;
- Figur 6.4: - eine perspektivische Explosionsdarstellung des Einsatzelementes nach Figur 6.1;
- Figur 6.5: - eine Einbausituation für das Einsatzelement nach Figur 6.2;
- Figur 7.1: - ein viertes Ausführungsbeispiel eines Verriegelungselementes mit zugehörigem nicht erfindungsgemäßen Einsatzelement;
- Figur 7.2: - ein fünftes Ausführungsbeispiel eines Verriegelungselementes mit zugehörigem nicht erfindungsgemäßen Einsatzelement;
- Figur 7.3: - ein sechstes Ausführungsbeispiel eines Verriegelungselementes mit zugehörigem nicht erfindungsgemäßen Einsatzelement;
- Figur 7.4: - ein siebtes Ausführungsbeispiel eines Verriegelungselementes mit zugehörigem nicht erfindungsgemäßen Einsatzelement;
- Figur 7.5: - ein achtes Ausführungsbeispiel eines Verriegelungselementes mit zugehörigem nicht erfindungsgemäßen Einsatzelement;
- Figur 7.6: - ein neuntes Ausführungsbeispiel eines Verriegelungselementes mit zugehörigem nicht erfindungsgemäßen Einsatzelement;
- Figur 7.7: - ein zehntes Ausführungsbeispiel eines Verriegelungselementes mit zugehörigem nicht erfindungsgemäßen Einsatzelement;
- Figur 7.8: - ein elftes Ausführungsbeispiel eines Verriegelungselementes mit zugehörigem nicht erfindungsgemäßen Einsatzelement;
- Figur 7.9: - ein zwölftes Ausführungsbeispiel eines Verriegelungselementes mit zugehörigem nicht erfindungsgemäßen Einsatzelement;
- Figur 8.1: - zwei aneinandergrenzende Paneele mit nicht erfindungsgemäß ausgestalteten Einsatzelementen in einer weiteren Ausführungsform;
- Figur 8.2: - die Paneele nach Figur 8.1 in verbundenem, nicht verriegeltem Zustand;
- Figur 9: - die Teildarstellung eines weiteren Paneels mit erfindungsgemäß ausgestalteten Verriegelungselement und Einsatzelement;
- Figur 10: - die Teildarstellung eines weiteren Paneels mit einem erfindungsgemäß ausgestalteten Verriegelungselement und einem nicht erfindungsgemäßen Einsatzelement;
- Figur 11.1: - ein Kraft-Dehnungs-Diagramm;
- Figur 11.2: - ein Kraft-Dehnungs-Diagramm;
- Figur 12.1: - ein Kraft-Dehnungs-Diagramm;
- Figur 12.2: - ein Kraft-Dehnungs-Diagramm;
- Figur 12.3: - die Darstellung einer Häufigkeitsverteilung;
- Figur 12.4: - die Darstellung der Maximalkraft;
- Figur 13.1: - ein Kraft-Dehnungs-Diagramm;
- Figur 13.2: - ein Kraft-Dehnungs-Diagramm;
- Figur 14.1: - ein Kraft-Dehnungs-Diagramm;
- Figur 14.2: - ein Kraft-Dehnungs-Diagramm;
- Figur 14.3: - die Darstellung einer Häufigkeitsverteilung;
- Figur 14.4: - die Darstellung der Maximalkraft;
- Figur 15: - die maximale Auszugskraft für verschiedene Verriegelungselemente.

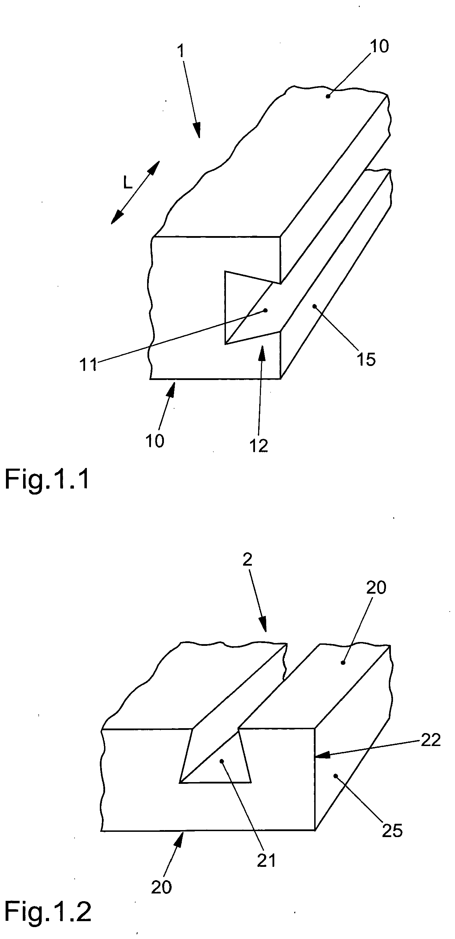

Die beiden in Figuren 1.1 und 1.2 dargestellten Möbelplatten 1, 2 bestehen aus einer Spanplatte als Trägerplatte und sind an ihren Flachseiten 10, 20 und ihren in einem Winkel zu den Flachseiten 10, 20 verlaufenden Schmalseiten 15, 25 mit einer Beschichtung, beispielsweise einem Holzdekor versehen. Die Schmalseiten 15, 25 verlaufen vorzugsweise im rechten Winkel zu den Flachseiten 10, 20, sie können aber auch auf Gehrung geschnitten sein. Das erste Paneel 1 ist an mindestens einer Schmalseite 15 mit einer im Querschnitt regelmäßig trapezförmig ausgestalteten Nut 11 versehen, die über die ganze Länge L verläuft. Das zweite Paneel 2 ist in mindestens einer seiner Flachseiten 20 mit einer ebenfalls im Querschnitt regelmäßig trapezförmigen Nut 21 versehen. In diese Nuten 11, 21 kann ein Einsatzelement 3 eingesetzt werden, dass im Querschnitt zu der Nut 11, 21 kongruent trapezförmig ausgestaltet ist. Das Einsatzelement 3 besteht vorzugsweise aus Kunststoff und kann im Spritzguss oder im Extrusionsverfahren hergestellt werden. Auch ist eine Herstellung mittels eines 3D-Druckers denkbar. Der breite, untere Teil der Nut 11, 21 (Nutgrund 34) ist vorzugsweise 10 mm breit, der obere und schmalere Teil 6 mm. Die Tiefe der Nut 11, 21 beträgt 10 mm. Die Breite der Nut 11, 21 muss so gewählt werden, dass die Verbindung in der Mittelschicht der Spanplatte liegt, um optimal die auftretenden Belastungen abzufangen. Selberverständlich sind auch andere Abmessungen der Nuten 11, 21 und Einsatzelemente 3 möglich. Der Fachmann wird eine dem Einsatzzweck geeignete Dimensionierung finden. Wenn die Nut 11, 21 40 mm lang ist, wird auch das Einsatzelement 3 40 mm lang gewählt werden. In diesem Beispiel ist es dann 16,3 mm breit und 4,4 mm hoch.

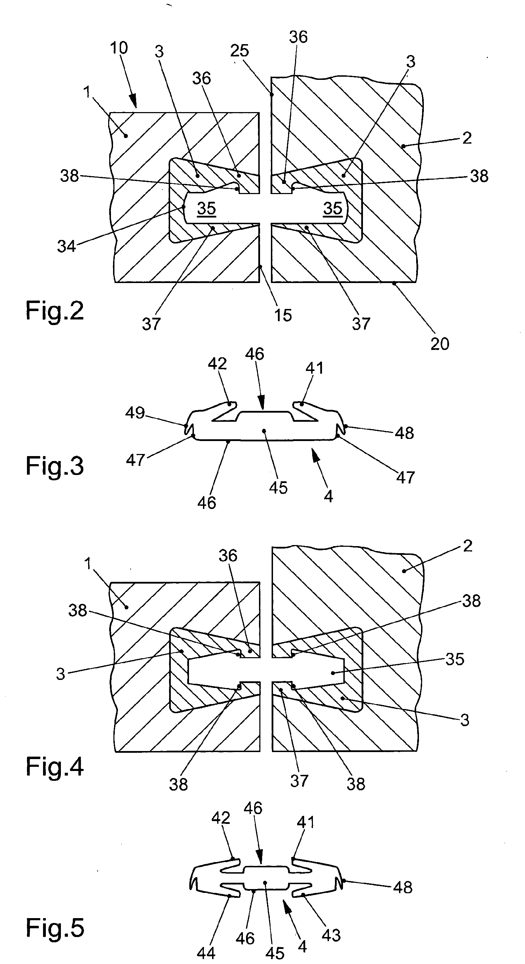

Das in Figur 2 dargestellte Einsatzelement 3 ist mit einer Längsnut 35 versehen, die zwei sich gegenüber liegende Verriegelungslippen 36, 37 ausbildet. In der Verriegelungslippe 36 ist eine Hinterschneidung 38 vorgesehen. Das zu diesem Einsatzelement passende Verriegelungselement 4 ist in Figur 3 dargestellt. Es besteht aus dem Grundkörper 45 mit zwei gegenüber liegenden Oberseiten 46, von denen sich zwei Federlippen 41, 42 zur Mitte des Grundkörpers 45 hin erstrecken. Die Federlippen 41, 42 sind in Richtung der Oberseite 46 federnd ausgebildet. An den gegenüberliegenden Längsseiten 47 des Grundkörpers 45 ist je eine Querfederlippe 48, 49 angeordnet, die auf den Grundkörper 45 zufedert. Zum Verbinden der beiden Platten 1, 2 wird das Federelement 4 zum Beispiel in die Nut 35 des Einsatzelementes 3 in der Platte 1 eingeschoben, wodurch die Federlippe 42 zusammengedrückt wird, bis sie in Übereindeckung mit der Hinterschneidung 38 gelangt und dort ausfedernd mit dem Einsatzelement 3 verrastet. Die Querfederlippe 49 stößt auf den Nutgrund 34 und erzeugt eine Druckkraft, die die Federlippe 42 gegen die Anlagefläche an die Hinterschneidung 38 presst, so dass das Verriegelungselement 4 fest in der Nut 35 aufgenommen und damit spielfrei mit dem Einsatzelement 3 verbunden wird. Anschließend wird die zweite Platte 2 rechtwinklig zu der ersten Platte auf das Verriegelungselement 4 aufgesetzt, bis die Federlippe 41 hinter die Hinterschneidung 38 eingreift und über die Querfederlippe 48 auch hier eine spielfreie Verbindung zwischen dem Verriegelungselement 4 und dem Einsatz 3 eingestellt wird. Die beiden Möbelplatten 1, 2 sind dann miteinander verbunden und verriegelt.

Bei dem in Figur 4 dargestellten Ausführungsbeispiel ist die Nut 35 im Querschnitt auch regelmäßig trapezförmig ausgestaltet und bildet zwei spiegelsymmetrische Verriegelungslippen 36, 37 aus, an denen jeweils eine Hinterschneidung 38 vorgesehen ist. Figur 5 zeigt das zu diesem Ausführungsbeispiel des Einsatzelementes 3 gehörende Verriegelungselement 4, das ebenfalls aus einem Grundkörper 45 besteht, von dem sich Federlippen 41 und 42 erstrecken, wobei sich dieses Verriegelungselement 4 gegenüber dem in Figur 3 gezeigten Verriegelungselement im Wesentlichen nur dadurch unterscheidet, dass vier Verriegelungslippen 41, 42, 43, 44 vorgesehen sind, die sich auf beiden Oberseiten 46 des Grundkörpers 45 erstrecken. Die Verbindung und spielfreie Verriegelung der Möbelplatten 1, 2 erfolgt wie zu dem in den Figuren 2 und 3 beschriebenen Ausführungsbeispiel.

Das Einsatzelement 3 muss von der am Ende offenen Seite 12, 22 der Nut 11, 21 eingeschoben werden. Je nachdem, wie groß die Länge L der Nut 11, 21 ist, ist hierzu durchaus ein nicht unerheblicher Kraftaufwand notwendet, um die Reibung zu überwinden.

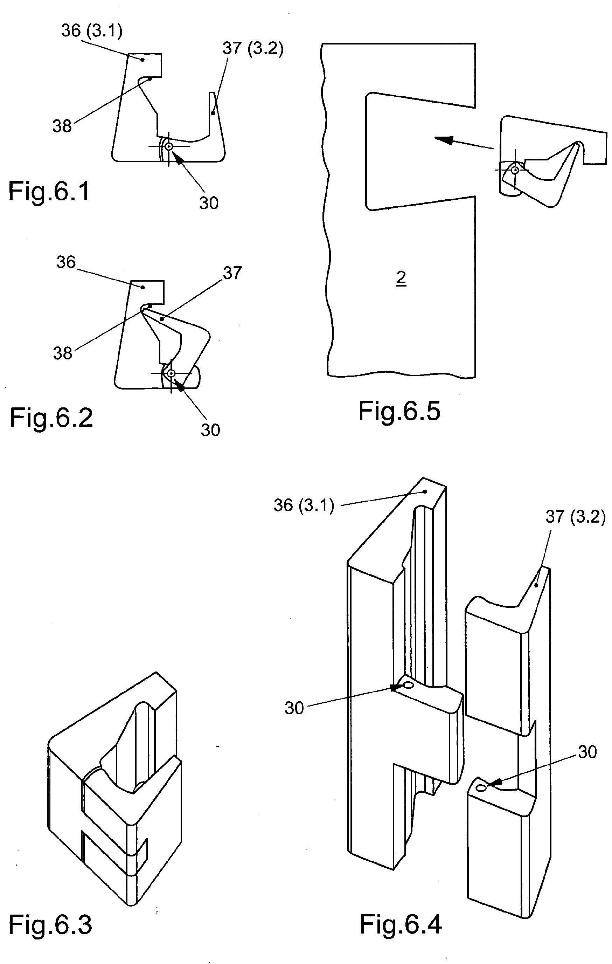

Das in Figuren 6.1 bis 6.4 dargestellte Einsatzelement 3 ist zweiteilig aufgebaut, wobei der erste Teil 3.1 eine mit einer Hinterschneidung 38 versehene Federlippe 36 und der zweite Teil 3.2 die Federlippe 37 ausbildet, die optional auch mit einer Hinterschneidung 38 versehen ist. Die beiden Teile 3.1 und 3.2 sind über ein Gelenk 30 zueinander verschwenkbar verbunden. Wie Figur 6.2 zeigt, kann die Verriegelungslippe 37 gegen die Verriegelungslippe 38 verschwenkt werden. In dieser Position kann das Einsatzelement3 von der Öffnung der Nut 11, 21 in der Schmalseite 15, 25 bzw. der Flachseite 10, 20 in die Nut 11 eingesetzt werden. Hierzu ist kein Kraftaufwand nötig. Wird der zweite Teil 3.2 zurückgeschwenkt, liegen beide Federlippen 36, 37 an den Wandungen der Nut 11 an. Wird wie zuvor beschrieben ein zu der Querschnittform der durch das zweiteilige Einsatzelement 3 gebildeten Nut 35 passendes Verriegelungselement 4 eingeschoben, werden die beiden Teile 3.1, 3.2 aufgespreizt und können nicht mehr zueinander verschwenken, so dass das zweiteilige Einsatzelement 3 ebenfalls spielfrei in der Nut 11, 21 aufgenommen wird und eine entsprechende feste und spielfreie Verbindung zwischen den Möbelplatten 1 und 2 hergestellt wird.

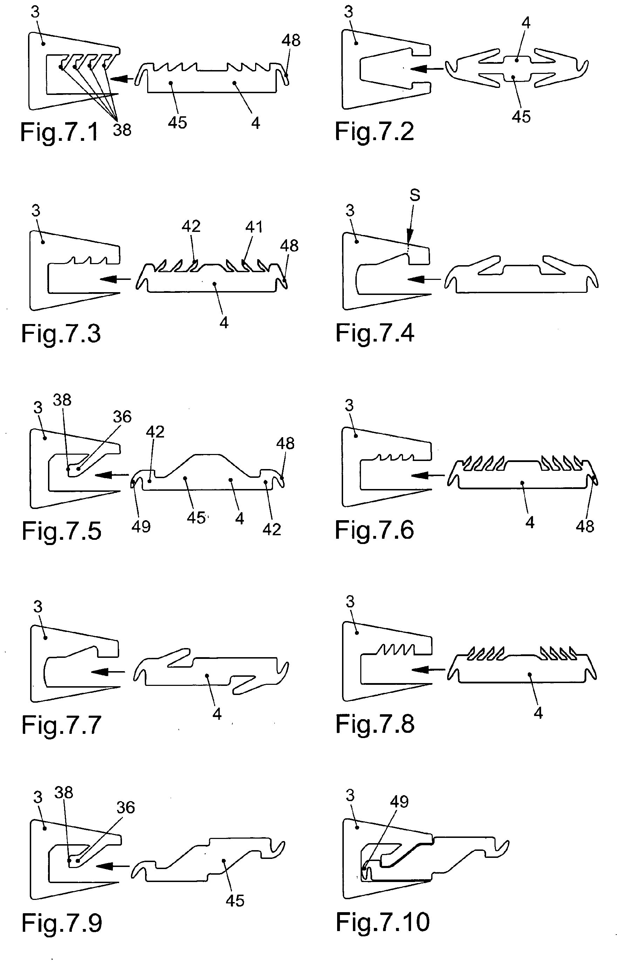

Figuren 7.1 bis 7.9 zeigen verschiedene Ausführungsbeispiele von Einsatzelementen 3 und zugehörigen Verriegelungselementen 4. Deren Funktion identisch zu den vorbeschriebenen Bauteilen ist. Bei der in Figur 7.1 dargestellten Ausführungsform sind im Einsatzelement 3 mehrere hintereinander angeordnete Hinterschneidungen 38 vorgesehen, die federnd an der Verriegelungslippe 36 angeordnet sind. Vom Grundkörper 45 des Verriegelungselementes 4 stehen Zacken ab, die in die Hinterschneidungen 38 eingreifen. Die Zacken sind starr. Bei dem in Figuren 7.3, 7.6 und 7.8 gezeigten Ausführungsbeispielen wird die Art der Verriegelung kinematisch umgekehrt. Die Hinterschneidungen 38 sind in der starr ausgebildeten Verriegelungslippe 36 vorgesehen, während die Zacken elastisch sind und somit Federlippen 41, 42 ausbilden. Bei dem in Figur 7.5 und 7.9 dargestellten Ausführungsbeispiel ist die Hinterschneidung 38 an der elastisch ausgebildeten Verriegelungslippe 36 des Einsatzelementes 3 ausgebildet. Die Lippe 42 ist integraler Bestandteil des Grundkörpers 45 des Verriegelungselementes 4 und im Wesentlichen unnachgiebig. Der Grundkörper 45 ist hierzu gestuft ausgebildet.

Allen Ausführungsbeispielen gemeinsam ist, dass an den Längsseiten 47 des Verriegelungselementes 4 Querfederlippen 48, 49 vorgesehen sind, die sich in dieselbe Richtung (vgl. 7.1) oder in entgegen gesetzte Richtungen (vgl. Figur 7.7) erstrecken können. Außerdem Stützen sich die Verriegelungslippen 35, 36 auf den gegenüberliegenden Oberseiten 46 des Grundkörpers 45 ab. Vorteilhaft ist es, wenn das Einsatzelement 3 mit einer Sollbruchstelle S versehen ist. Bei dem in Figur 7.4 gezeigten Ausführungsbeispiel ist die Sollbruchstelle S an der Verriegelungslippe 36 vorgesehen. Durch eine solche Ausgestaltung wird verhindert, dass im Falle von Auszugskräften, die die Festigkeit einer Spanplatte überschreiten, das Einsatzelement 3 bricht, und damit ein Aufbrechen der Spanplatte ausgeschlossen wird, denn dadurch würde das Möbel unbrauchbar werden.

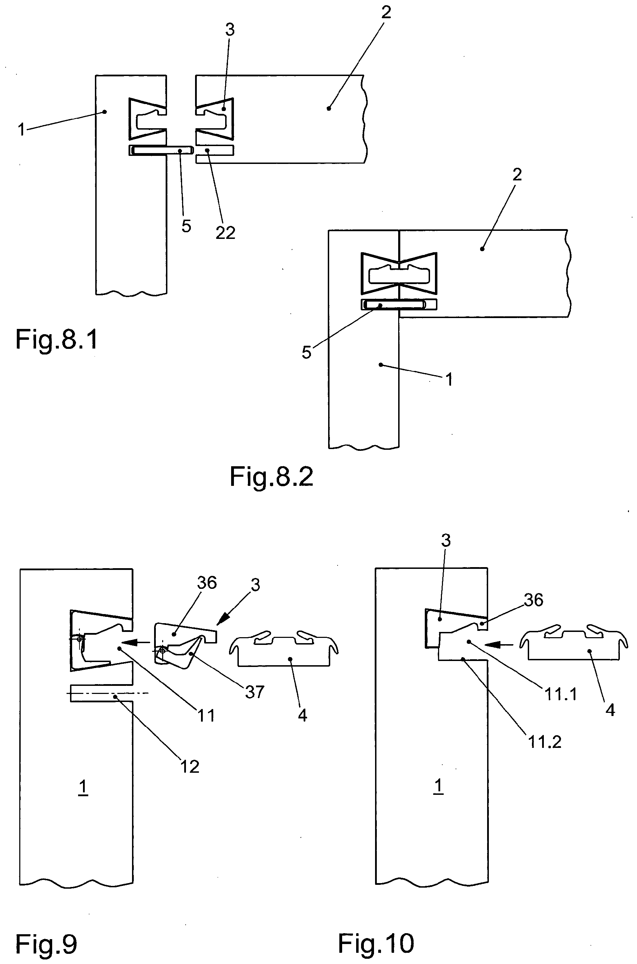

Bei dem in den Figuren 8 und 9 gezeigten Ausführungsbeispiel ist in den Möbelplatten 1, 2 unterhalb der Nut 11, 12 eine Bohrung 12, 22 vorgesehen. Diese Bohrungen 12, 22 fluchten zueinander, wenn die Platten 1, 2 aneinandergelegt werden. Über einen einzigen Dübel 5 werden die Bohrungen 12, 22 verschlossen. Der Dübel 5 erleichtert die Positionierung der Möbelplatten 1, 2 zueinander. Figur 8.2 zeigt zwei miteinander verbundene Möbelplatten 1, 2 ohne Verriegelungselement 4. Die Platten 1, 2 sind zwar miteinander verbunden aber noch nicht zueinander verriegelt. Ein Verriegelungselement 4 könnte nun von vorne, das heißt in die Zeichenebene hinein in die Einsatzelemente 3 hineingeschoben werden, es könnte aber auch wie zuvor beschrieben in einen der Einsatzelemente 3 eingesetzt und dann in das andere Einsatzelement eingeklickt werden. Der Dübel 5 erleichtert nicht nur die Positionierung der Möbelplatten 1, 2 zueinander, sondern er kann auch zusätzliche Lasten abfangen.

Bei dem in Figur 10 gezeigten Ausführungsbeispiel ist die Nut 11.1 an einer Wandung 11.2 gestuft ausgebildet. Die gegenüberliegende Wandung verläuft schräg. Das Einsatzelement 3 stützt sich mit seinem hinteren Bereich auf dem oberen Teil der gestuften Wandung 11.2 ab. Es ist nur eine Verriegelungslippe 36 vorhanden.

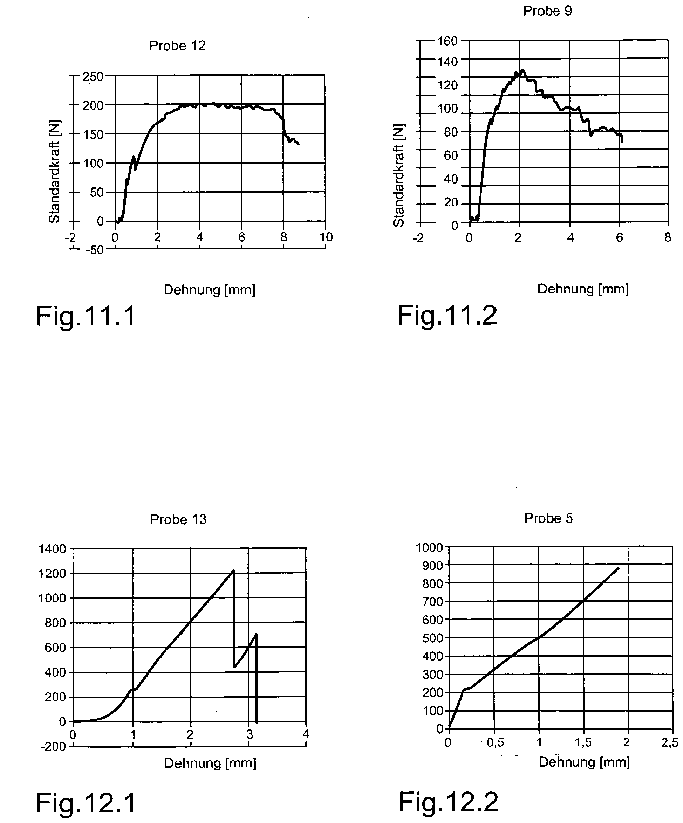

Anhand der Figuren 11 bis 15 sollen Zugversuche erläutert werden, die mit verschiedenen Verriegelungselementen 4 durchgeführt wurden.

### Versuch I

Zunächst wurden Versuche mit dem Verriegelungselement 4 nach Figur 5 durchgeführt in einem Einsatzelement 3, das in die Nut 11 einer Spanplatte eingesetzt war. Die nachfolgende Tabelle 11 zeigt die maximal aufgebrachte Kraft bis die Spanplatte zerbrach.

**Tabelle 11**

| Nr | Proben-Nr. | Datum | Uhrzeit | Fₘₐₓ N | dL bei Fₘₐₓ mm | F_{Bruch} N | dL bei Bruch mm | t_{Prüfung} s |
|---|---|---|---|---|---|---|---|---|
| 1 | 1 | 12.01.2015 | 10:44:39 | 206 | 3,4 | - | - | 38,64 |
| 2 | 2 | 12.01.2015 | 10:46:17 | 209 | 6,2 | - | - | 52,02 |
| 3 | 3 | 12.01.2015 | 10:48:17 | 179 | 2,8 | - | - | 39,20 |
| 4 | 4 | 12.01.2015 | 10:49:50 | 141 | 1,6 | - | - | 38,78 |
| 5 | 5 | 12.01.2015 | 10:52:17 | 160 | 1,8 | - | - | 48,46 |
| 6 | 6 | 12.01.2015 | 10:54:05 | 183 | 3,6 | - | - | 38,62 |
| 7 | 7 | 12.01.2015 | 10:55:51 | 199 | 4,3 | - | - | 50,74 |
| 8 | 8 | 12.01.2015 | 10:57:37 | 188 | 2,9 | - | - | 38,34 |
| 9 | 9 | 12.01.2015 | 10:59:33 | 134 | 1,9 | - | - | 38,18 |
| 10 | 10 | 12.01.2015 | 11:00:50 | 155 | 5,8 | - | - | 51,74 |
| 11 | 11 | 12.01.2015 | 11:02:43 | 183 | 2,5 | - | - | 38,52 |
| 12 | 12 | 12.01.2015 | 11:04:37 | 204 | 4,7 | - | - | 54,18 |
| 13 | 13 | 12.01.2015 | 11:06:37 | 193 | 3,8 | - | - | 41,02 |
| 14 | 14 | 12.01.2015 | 11:08:32 | 150 | 3,4 | - | - | 40,68 |
| 15 | 15 | 12.01.2015 | 11:10:17 | 159 | 2,1 | - | - | 39,10 |

Figuren 11.1 und 11.2 zeigen das Kraft-Dehnungs-Diagramm zu den Proben 12 und 9. Der zweifach verankerte Klickmechanismus zeigt ein gewisses Setzungsverhalten am Anfang der Prüfung, welches aber wohl auch den Versuchsaufbau zurückzuführen war. Alle 15 Prüfungen zeigen einen beinahe linearen Anstieg von 130 N bis 140 N und danach entsteht eine starke Streuung der gemessenen Werte. Dies ist auf den Aufbau der Spanplatte zurückzuführen.

### Versuch II

Derselbe Zugversuch wurde anschließend in Sperrholz durchgeführt. Tabelle 12 zeigt die dabei gemessenen maximalen Kräfte.

**Tabelle 12**

| Nr | Proben-Nr. | Datum | Uhrzeit | Fₘₐₓ N | dL bei Fₘₐₓ mm | F_{Bruch} N | dL bei Bruch mm | t_{Prüfung} s |
|---|---|---|---|---|---|---|---|---|
| 1 | 1 | 12.01.2015 | 13:21:23 | 1050 | 5,6 | 1050 | 5,6 | 34,58 |
| 2 | 2 | 12.01.2015 | 13:25:00 | 1020 | 2,9 | 1020 | 2,9 | 18,40 |
| 5 | 3 | 12.01.2015 | 13:29:14 | 888 | 1,9 | 888 | 1,9 | 12,56 |
| 6 | 4 | 12.01.2015 | 13:31:28 | 975 | 2,7 | 812 | 3,4 | 21,48 |
| 7 | 5 | 12.01.2015 | 13:33:48 | 1140 | 3,2 | 1130 | 3,2 | 20,40 |
| 9 | 6 | 12.01.2015 | 13:37:14 | 1030 | 3,0 | 1030 | 3,0 | 18.90 |
| 10 | 7 | 12.01.2015 | 13:39:46 | 1250 | 3,3 | 749 | 3,8 | 23,66 |
| 11 | 8 | 12.01.2015 | 13:42:07 | 1180 | 3,3 | 744 | 3,9 | 24,30 |
| 13 | 9 | 12.01.2015 | 13:45:33 | 1220 | 2,8 | -12,2 | 3,2 | 20,12 |
| 14 | 10 | 12.01.2015 | 13:48:04 | 1080 | 4,1 | 685 | 4,2 | 26,06 |
| 15 | 11 | 12.01.2015 | 13:50:13 | 1180 | 3,5 | 730 | 3,6 | 22,72 |
| 17 | 12 | 12.01.2015 | 13:52:39 | 1120 | 3,3 | 5,23 | 3,6 | 22,82 |
| 19 | 13 | 12.01.2015 | 13:55:07 | 1150 | 4,0 | 1150 | 4,0 | 24.94 |
| 20 | 14 | 12.01.2015 | 13:57:23 | 1160 | 3,7 | -6,97 | 3,7 | 23,52 |
| 21 | 15 | 12.01.2015 | 13:59:44 | 1120 | 3,8 | 1120 | 3,8 | 23,90 |

Figuren 12.1 und 12.2 zeigen das Kraft-Dehnungs-Diagramm für die Proben 13 und 5. Erkennbar ist, dass nach einem linearen Kraftanstieg zunächst der Bruch auf einer Seite des Nutteils erfolgt, was aber deshalb geschah, weil das Verriegelungselement 4 aus dem Verbund herausgezogen wurde und nicht mehr allseits von einem Werkstoff gestützt ist. Die Kraft fällt für einen Augenblick ab. Dies ist darauf zurückzuführen, dass eine der Verriegelungslippen 36, 37 des Einsatzelementes 3 weggebrochen ist und die komplett auftretende Kraft nur noch auf die verbleibende Verriegelungslippe 36 verteilt wird. Schließlich bricht auch diese weg und die Verbindung ist zerstört.

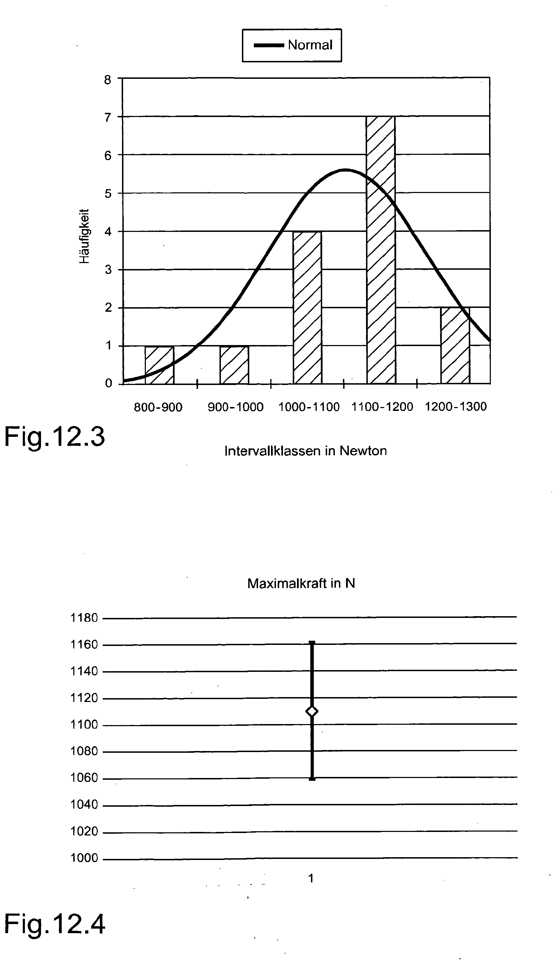

Um die numerischen Maximalkräfte von Tabelle 12 zu organisieren und zu veranschaulichen, wurden die Werte in dem in Figur 12.3 gezeigten Histogramm zusammengefasst und über die einzelnen Werte eine Normalverteilungskurve angelegt. Dabei betrug:

| | |
|---|---|
| Mittelwert aller Prüfungen | 1109,92614 |
| Standardabweichung | 97,1998549 |
| untere Toleranzgrenze | 888 |
| obere Toleranzgrenze | 1250 |
| Toleranzbreite | 362 |
| Wahrscheinlichkeit einer Unterschreitung | 1,12% |
| Wahrscheinlichkeit einer Überschreitung | 7,48% |

Die maximal aufgetretene Kraft beträgt 1150 N und ist in Figur 12.4 dargestellt.

### Versuch III

Anschließend wurden Versuche mit dem Verriegelungselement 4 nach Figur 3 durchgeführt, wobei die gemessenen Kräfte der nachfolgenden Tabelle 13 entnehmbar sind.

**Tabelle 13**

| Nr | Proben-Nr. | Datum | Uhrzeit | Fₘₐₓ N | dL bei Fₘₐₓ mm | F_{Bruch} N | dL bei Bruch mm | t_{Prüfung} s |
|---|---|---|---|---|---|---|---|---|
| 1 | 1 | 12.01.2015 | 09:47:03 | 199 | 3,5 | - | - | 51,32 |
| 3 | 2 | 12.01.2015 | 09:57:42 | 148 | 5,9 | - | - | 65,62 |
| 4 | 3 | 12.01.2015 | 10:00:22 | 160 | 3,2 | - | - | 36,74 |
| 5 | 4 | 12.01.2015 | 10:03:34 | 169 | 8,1 | - | - | 64,94 |
| 6 | 5 | 12.01.2015 | 10:15:13 | 171 | 5,8 | - | - | 52,40 |
| 7 | 6 | 12.01.2015 | 10:17:28 | 155 | 4,3 | - | - | 47,42 |
| 8 | 7 | 12.01.2015 | 10:19:17 | 131 | 4,8 | - | - | 37,86 |
| 9 | 8 | 12.01.2015 | 10:21:16 | 103 | 1,9 | - | - | 41,56 |
| 10 | 9 | 12.01.2015 | 10:23:13 | 195 | 7,1 | - | - | 51,28 |
| 11 | 10 | 12.01.2015 | 10:25:49 | 172 | 4,4 | - | - | 51,14 |
| 12 | 11 | 12.01.2015 | 10:27:49 | 185 | 4,6 | - | - | 50,36 |
| 13 | 12 | 12.01.2015 | 10:30:05 | 134 | 3,2 | - | - | 49,56 |
| 14 | 13 | 12.01.2015 | 10:31:58 | 150 | 7,0 | - | - | 61,60 |
| 15 | 14 | 12.01.2015 | 10:33:59 | 169 | 7,6 | - | - | 50,90 |

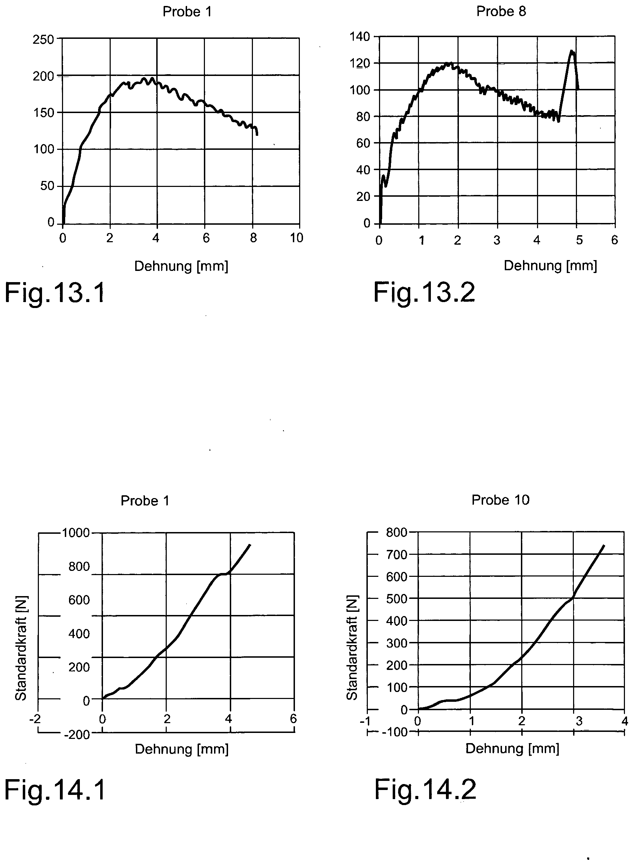

Für die Proben 1 und 8 ist in den Figuren 13.1 und 13.2 das Kraft-Dehnungs-Diagramm dargestellt. Erkennbar ist, dass das Verriegelungselement 4 einen linearen Kraftanstieg von bis zu 300 N bei unter 2% Dehnung aufweist. Gefolgt wird der Kraftanstieg von einem Abfall der Kurve, der auf das Brechen der Spanplatte hinweist. Ein abrupter Kraftabfall wäre typisch für den Bruch des Verriegelungselementes 4. Die Stelle, an der das Einsatzelement 3 bricht, ist immer die gleiche. Aufgrund der plastischen Verformung der Spanplatte sowie deren Eigenschaften und Produktionsmerkmale ist diese Streuung auf den Verbund des Plattenwerkstoffes zurückzuführen.

Derselbe Versuch in einer Möbelplatte aus Sperrholz ist in der nachfolgenden Tabelle 14 dokumentiert:

**Tabelle 14**

| Nr | Proben-Nr. | Datum | Uhrzeit | Fₘₐₓ N | dL bei Fₘₐₓ mm | F_{Bruch} N | dL bei Bruch mm | t_{Prüfung} s |
|---|---|---|---|---|---|---|---|---|
| 1 | 1 | 12.01.2015 | 12:13:29 | 930 | 4,6 | 928 | 4,6 | 28,68 |
| 2 | 2 | 12.01.2015 | 12:48:29 | 820 | 4,7 | 820 | 4,7 | 29,28 |
| 3 | 3 | 12.01.2015 | 12:52:23 | 827 | 4,7 | 827 | 4,7 | 29,26 |
| 4 | 4 | 12.01.2015 | 12:54:55 | 758 | 6,5 | 758 | 6,5 | 40,02 |
| 5 | 5 | 12.01.2015 | 12:57:37 | 871 | 7,3 | 871 | 7,3 | 44,60 |
| 6 | 6 | 12.01.2015 | 13:00:01 | 836 | 4,5 | -22,6 | 4,6 | 28,42 |
| 7 | 7 | 12.01.2015 | 13:02:29 | 834 | 3,3 | -17,4 | 3,3 | 21,16 |
| 8 | 8 | 12.01.2015 | 13:05:49 | 859 | 4,5 | 85,4 | 4,5 | 28,24 |
| 9 | 9 | 12.01.2015 | 13:07:02 | 798 | 3,4 | 796 | 3,4 | 21,42 |
| 10 | 10 | 12.01.2015 | 13:08:52 | 744 | 3,7 | 744 | 3,7 | 23,10 |
| 11 | 11 | 12.01.2015 | 13:10:15 | 810 | 4,0 | 810 | 4,0 | 25,04 |
| 12 | 12 | 12.01.2015 | 13:11:19 | 888 | 3,9 | 887 | 3,9 | 24,72 |
| 13 | 13 | 12.01.2015 | 13:12:51 | 845 | 4,1 | 0,000 | 4,1 | 25,66 |
| 14 | 14 | 12.01.2015 | 13:14:20 | 866 | 4,0 | 859 | 4,0 | 24,94 |
| 15 | 15 | 12.01.2015 | 13:15:56 | 901 | 3,8 | 71,4 | 3,8 | 23,78 |
| 16 | 16 | 12.01.2015 | 13:16:57 | 801 | 3,4 | 1,74 | 3,5 | 21,84 |

In Figuren 14.1 und 14.2 ist das Kraft-Dehnungs-Diagramm für die Proben 1 und 10 dargestellt. Erkennbar ist, dass die Kurve sofort ansteigt und bei anderen der Kurvenverlauf mit einer längeren Setzung der Teile beginnt. Dies ist auf den Aufbau der Prüfvorrichtung zurückzuführen, da es nicht immer möglich war, die Teile unter Spannung in der Prüfmaschine zu platzieren. Nachdem sich alle Teile gesetzt haben, ist der lineare und konstant gleiche Anstieg aller 16 Proben gut erkennbar. Nach dem Ansteigen der Kurve erfolgt ein sauberer Bruch bei durchschnittlich 837 N (F_{Max}). Bis auf zwei Messungen lagen alle Kurven recht nah beieinander, was für die Verlässlichkeit des Verriegelungselementes 4 nach Figur 3 spricht.

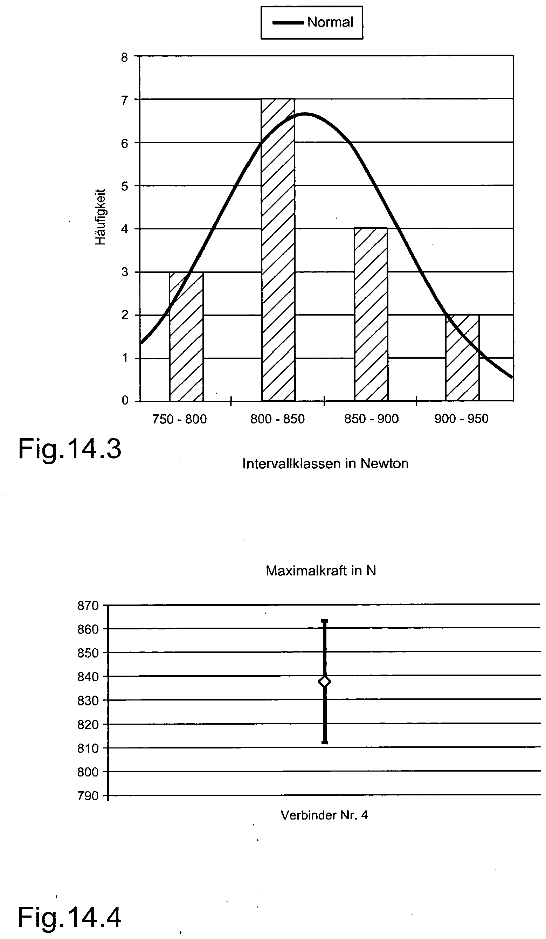

Um die numerischen Maximalkräfte F_{Max} nach Tabelle 14 zu organisieren und zu veranschaulichen wurden die Werte in ein Histogramm zusammenfassend überführt, das in Figur 14.3 dargestellt ist. Die sich dabei ergebenden Werte betragen:

| | |
|---|---|
| Mittelwert aller Prüfungen | 837,408127 |
| Standardabweichung | 48,3029346 |
| untere Toleranzgrenze | 753 |
| obere Toleranzgrenze | 930 |
| Toleranzbreite | 17 |
| Wahrscheinlichkeit einer Unterschreitung | 4,03% |
| Wahrscheinlichkeit einer Überschreitung | 2,76% |

Die durchschnittliche Maximalkraft, die in Figur 14.4 dargestellt ist, betrug 837,41 N.

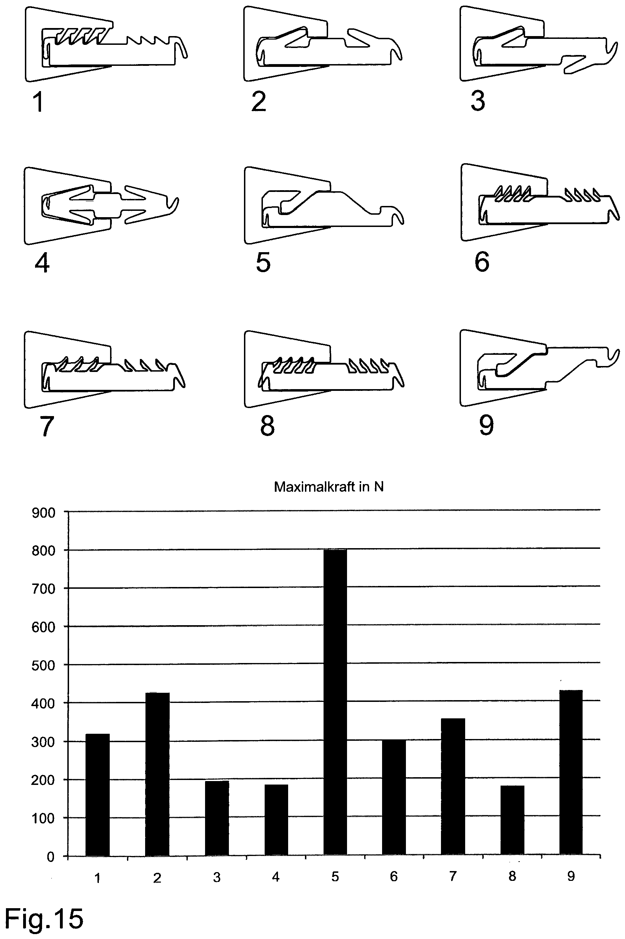

Figur 15 zeigt visualisiert die Maximalkraft für die verschiedenen Geometrien der Verbindungselemente.

**Bezugszeichenliste**

| | | | |
|---|---|---|---|
| 1 | Möbelplatte | 35 | Nut |
| 10 | Oberseite | 36 | Verriegelungslippe |
| 11 | Nut | 37 | Verriegelungslippe |
| 11.1 | Nut | 38 | Hinterschneidung |
| 11.2 | Wandung | 4 | Verriegelungselement |
| 12 | Bohrung | 41 | Federlippe |
| 15 | Schmalseite | 42 | Lippe oder Federlippe |
| 2 | Möbelplatte | 43 | Feder |
| 20 | Oberseite | 44 | Feder |
| 21 | Nut | 45 | Grundkörper |
| 22 | Bohrung | 46 | Oberseite |
| 25 | Schmalseite | 47 | Längsseite |
| 3 | Einsatzelement | 48 | Querfederlippe |
| 3.1 | Teil | 49 | Querfederlippe |
| 3.2 | Teil | S | Sollbruchstelle |
| 30 | Gelenk | L | Länge |
| 34 | Nutgrund | | |

## Patentansprüche

1. Einrichtung mit der zwei Platten (1, 2), insbesondere Möbelplatten bestehend aus einer beschichteten Holzwerkstoffplatte, insbesondere Spanplatte, winklig verbunden und verriegelt werden, wobei die Platten (1, 2) die zwei gegenüberliegende Flachseiten (10, 20) und vier im Winkel zu den Flachseiten (10, 20) verlaufende Schmalseiten (15, 25) aufweisen, und eine der Platten (1) mindestens in einer der Schmalseiten (15) und die andere Platte (2) in mindestens einer der Flachseiten (20) eine Nut (11, 21) aufweist, in die jeweils ein Einsatzelement (3) eingesetzt ist, das jeweils mindestens eine Hinterschneidung (38) aufweist, und jede Hinterschneidung (38) mit einer Lippe oder Federlippe (42, 41) eines Verriegelungselementes (4) zusammenwirkt, das in die Einsatzelemente (3) einschnappbar ausgebildet ist, **dadurch gekennzeichnet, dass** die Einsatzelemente (3) im Querschnitt trapezförmig, insbesondere gleichschenklig trapezförmig und zweiteilig ausgebildet sind und die beiden Teile (3.1, 3.2) gelenkig miteinander verbunden sind.

2. Einrichtung nach Anspruch 1, **dadurch gekennzeichnet, dass** das Einsatzelement (3) mindestens zwei sich gegenüberliegende Hinterschneidungen (38) aufweist.

3. Einrichtung nach Anspruch 1 oder 2, **dadurch gekennzeichnet, dass** das Einsatzelement (3) mindestens zwei hintereinander angeordnete Hinterschneidungen (38) aufweist.

4. Einsatz nach einem der vorstehenden Ansprüche, **dadurch gekennzeichnet, dass** die Nuten (11, 21) über die volle Länge der Flachseite (10 oder 20) und der Schmalseite (15 oder 25) ausgebildet ist.

5. Einrichtung nach einem der vorstehenden Ansprüche, **dadurch gekennzeichnet, dass** die Nuten (11, 21) im Querschnitt trapezförmig, insbesondere gleichschenklig trapezförmig ausgebildet sind.

6. Einrichtung nach einem der vorstehenden Ansprüche, **dadurch gekennzeichnet, dass** die Einsatzelemente (3) mit einer Nut (35) versehen sind, die zwei sich gegenüberliegende Verriegelungslippen (36, 37) ausbildet, und mindestens an einer der Verriegelungslippen (36, 37) eine Hinterschneidung (38) ausgeformt ist.

7. Einrichtung nach Anspruch 6, **dadurch gekennzeichnet, dass** an beiden Verriegelungslippen (36, 37) eine Hinterschneidung (38) ausgeformt ist.

8. Einrichtung nach einem der vorstehenden Ansprüche, **dadurch gekennzeichnet, dass** die Einsatzelemente (3) und/oder das Verriegelungselement (4) aus Kunststoff bestehen.

9. Einrichtung nach Anspruch 1 oder 7, **dadurch gekennzeichnet, dass** an jedem Teil (3.1, 3.2) eine der Verriegelungslippen (36, 37) ausgebildet ist.

10. Einrichtung nach einem der vorstehenden Ansprüche, **dadurch gekennzeichnet, dass** das Verriegelungselement (4) aus einem Grundkörper (45) mit zwei sich gegenüberliegenden Oberseiten (46) und zwei sich gegenüberliegenden Längsseiten (47) besteht, an dem die Federlippen (41, 42) in Richtung der Oberseite (46) federnd angeordnet sind.

11. Einrichtung nach Anspruch 10, **dadurch gekennzeichnet, dass** die Federlippen (41, 42) zu derselben Oberseite (45) federnd angeordnet sind.

12. Einrichtung nach Anspruch 10, **dadurch gekennzeichnet, dass** die Federlippen (41, 42) zu je einer der gegenüberliegenden Oberseiten (46) angeordnet sind.

13. Einrichtung nach Anspruch 11 oder 12, **dadurch gekennzeichnet, dass** mehr als zwei Federlippen (41, 43, 42, 44) angeordnet sind.

14. Einrichtung nach einem der Ansprüche 6 bis 9, **dadurch gekennzeichnet, dass** mindestens eine der Verriegelungslippen (36, 37) des Einsatzelementes (3) federnd ausgebildet ist.

15. Einrichtung nach Anspruch 14, **dadurch gekennzeichnet, dass** die Lippe (42) des Verriegelungselementes (4) im Wesentlichen unnachgiebig ausgebildet ist.

16. Einrichtung nach Anspruch 15, **dadurch gekennzeichnet, dass** die Lippe (42) integraler Bestandteil eines Grundkörpers (45) des Verriegelungselementes (4) ist.

17. Einrichtung nach Anspruch 15, **dadurch gekennzeichnet, dass** der Grundkörper (45) im Querschnitt gestuft ausgebildet ist.

18. Einrichtung nach einem der Ansprüche 10 bis 17, **dadurch gekennzeichnet, dass** an den Längsseiten (47) mindestens je eine Querfederlippe (48, 49) in Richtung der Längsseite (47) federnd angeordnet ist.

19. Einrichtung nach Anspruch 18, **dadurch gekennzeichnet, dass** die Querfederlippen (48, 49) sich in dieselbe Richtung erstrecken.

20. Einrichtung nach Anspruch 18, **dadurch gekennzeichnet, dass** die Querfederlippen (48, 49) sich in entgegengesetzten Richtungen erstrecken.

21. Einrichtung nach einem der vorstehenden Ansprüche, **dadurch gekennzeichnet, dass** zusätzlich zu den Nuten (11, 21) jede Platte (1, 2) eine Bohrung (12, 22) aufweist und die sich gegenüberliegenden Bohrungen (12, 22) mit einem einzigen Dübel (5) verschlossen sind.

## Claims

1. Device, with which two panels (1, 2), in particular furniture panels consisting of a coated wood composite panel, in particular particle board, are angularly connected and interlocked, wherein the panels (1, 2) comprise two opposite flat sides (10, 20) and four narrow sides (15, 25) extending angularly to the flat sides (10, 20) and one of the panels (1) has a groove (11, 21) in at least one of the narrow sides (15) and the other panel (2) has a groove (11, 21) in at least one of the flat sides (20), each groove having an insertion element (3) inserted into it, which comprises at least one undercut (38) and each undercut (38) cooperates with a lip or spring lip (42, 41) of a locking element (4) which is configured so that it can be snapped into the insertion elements (3), **characterised in that** the insertion elements (3) are trapezoidal, in particular isosceles trapezoidal in cross-section, and made up of two parts and the two parts (3.1, 3.2) are connected with each other in an articulated manner.

2. Device according to Claim 1, **characterised in that** the insertion element (3) has at least two undercuts (38) lying opposite each other.

3. Device according to Claim 1 or 2, **characterised in that** the insertion element (3) has at least two undercuts (38) arranged one behind the other.

4. Insert according to one of the preceding claims, **characterised in that** the grooves (11, 21), are formed across the full length of the flat side (10 or 20) and the narrow side (15 or 25).

5. Device according to one of the preceding claims, **characterised in that** the grooves (11, 21) are formed trapezoidal, in particular isosceles trapezoidal, in cross section.

6. Device according to one of the preceding claims, **characterised in that** the insertion elements (3) are provided with a groove (35) which forms two opposing locking lips (36, 37), and an undercut (38) is formed on at least one of the locking lips (36, 37).

7. Device according to Claim 6, **characterised in that** an undercut (38) is formed on both locking lips (36, 37).

8. Device according to one of the preceding claims, **characterised in that** the insertion elements (3) and/or the locking element (4) consist of plastic.

9. Device according to Claim 1 or 7, **characterised in that** each part (3.1, 3.2) has one of the locking lips (36, 37) formed on it.

10. Device according to one of the preceding claims, **characterised in that** the locking element (4) consists of a basic body (45) with two opposing top sides (46) and two opposing longitudinal sides (47), on which the spring lips (41, 42) are arranged so as to be springy in direction of the top side (46).

11. Device according to Claim 10, **characterised in that** the spring lips (41, 42) are arranged so as to be springy in direction of the same top side (45).

12. Device according to Claim 10, **characterised in that** the spring lips (41, 42) are arranged in direction of respectively one of the opposing top sides (46).

13. Device according to Claim 11 or 12, **characterised in that** more than two spring lips (41, 43, 42, 44) are provided.

14. Device according to one of Claims 6 to 9, **characterised in that** at least one of the locking lips (36, 37) of the insertion element (3) is formed so as to be springy.

15. Device according to Claim 14, **characterised in that** the lip (42) of the locking element (4) is formed essentially rigid.

16. Device according to Claim 15, **characterised in that** the lip (42) is an integral part of a basic body (45) of the locking element (4).

17. Device according to Claim 15, **characterised in that** the basic body (45) is formed stepped in cross-section.

18. Device according to one of Claims 10 to 17, **characterised in that** at least one transverse spring lip (48, 49) is arranged on each of the longitudinal sides (47) so as to be springy in direction of the longitudinal side (47).

19. Device according to Claim 18, **characterised in that** the transverse spring lips (48, 49) extend in the same direction.

20. Device according to Claim 18, **characterised in that** the transverse spring lips (48, 49) extend in opposite directions.

21. Device according to one of the preceding claims, **characterised in that** in addition to the grooves (11, 21) each panel (1, 2) comprises a bore (12, 22) and **in that** the opposing bores (12, 22) are closed by a single dowel (5).

## Revendications

1. Dispositif permettant de relier et de verrouiller angulairement deux plaques (1, 2), en particulier des plaques de meuble, constituées par une plaque en matériau à base de bois revêtue, en particulier un panneau d'agglomérés, dans lequel les plaques (1, 2) comprennent deux côtés plats (10, 20) opposés l'un à l'autre et quatre petits côtés (15, 25) qui s'étendent sous un angle par rapport aux côtés plats (10, 20), et l'une des plaques (1) comprend une rainure (11, 21) dans l'un au moins des petits côtés (15) et l'autre plaque (2) comprend une rainure (11, 21) dans l'un au moins des côtés plats (20), rainures dans lesquelles sont insérés respectivement un élément formant insert (3) qui présente chacun au moins une contre-dépouille (38), et chaque contre-dépouille (38) coopère avec une lèvre ou une lèvre élastique (42, 41) d'un élément de verrouillage (4) qui est réalisé de manière à pouvoir s'encliqueter dans les éléments formant insert (3),
**caractérisé en ce que**
les éléments formant insert (3) sont réalisés avec une section transversale en forme de trapèze, en particulier en forme de trapèze isocèle, et en deux pièces, et les deux pièces (3.1, 3.2) sont reliées en articulation l'une à l'autre.

2. Dispositif selon la revendication 1, **caractérisé en ce que** l'élément formant insert (3) comprend au moins deux contre-dépouilles (38) qui sont en regard l'une de l'autre.

3. Dispositif selon la revendication 1 ou 2, **caractérisé en ce que** l'élément formant insert (3) comprend au moins deux contre-dépouilles (38) agencées l'une derrière l'autre.

4. Dispositif selon l'une des revendications précédentes, **caractérisé en ce que** les rainures (11, 21) sont réalisées sur toute la longueur du côté plat (10 ou 20) et du petit côté (15 ou 25).

5. Dispositif selon l'une des revendications précédentes, **caractérisé en ce que** les rainures (11, 21) sont réalisées avec une section transversale en forme de trapèze, en particulier en forme de trapèze isocèle.

6. Dispositif selon l'une des revendications précédentes, **caractérisé en ce que** les éléments formant insert (3) sont pourvus d'une rainure (35) qui réalise deux lèvres de verrouillage (36, 37) opposées l'une à l'autre, et **en ce qu'**une contre-dépouille (38) est formée sur l'une au moins des lèvres de verrouillage (36, 37).

7. Dispositif selon la revendication 6, **caractérisé en ce qu'**une contre-dépouille (38) est formée sur les deux lèvres de verrouillage (36, 37).

8. Dispositif selon l'une des revendications précédentes, **caractérisé en ce que** les éléments formant insert (3) et/ou l'élément de verrouillage (4) est/sont constitué(s) en matière plastique.

9. Dispositif selon la revendication 1 ou 7, **caractérisé en ce que** sur chaque pièce (3.1, 3.2) est réalisée l'une des lèvres de verrouillage (36, 37).

10. Dispositif selon l'une des revendications précédentes, **caractérisé en ce que** l'élément de verrouillage (4) est constitué par un corps de base (45) comprenant deux côtés supérieurs opposés (46) et deux côtés longitudinaux opposés (47), sur lequel les lèvres élastiques (41, 42) sont agencées élastiquement en direction du côté supérieur (46).

11. Dispositif selon la revendication 10, **caractérisé en ce que** les lèvres élastiques (41, 42) sont agencés élastiquement vers le même côté supérieur (45).

12. Dispositif selon la revendication 10, **caractérisé en ce que** les lèvres élastiques (41, 42) sont agencées respectivement vers l'un des côtés supérieurs opposés (46).

13. Dispositif selon la revendication 11 ou 12, **caractérisé en ce qu'**il est prévu plus de deux lèvres élastiques (41, 43, 42, 44).

14. Dispositif selon l'une des revendications 6 à 9, **caractérisé en ce que** l'une au moins des lèvres de verrouillage (36, 37) de l'élément formant insert (3) est réalisée élastique.

15. Dispositif selon la revendication 14, **caractérisé en ce que** la lèvre (42) de l'élément de verrouillage (4) est réalisée sensiblement inflexible.

16. Dispositif selon la revendication 15, **caractérisé en ce que** la lèvre (42) fait partie intégrale d'un corps de base (45) de l'élément de verrouillage (4).

17. Dispositif selon la revendication 15, **caractérisé en ce que** le corps de base (45) est réalisé avec une section transversale en gradin.

18. Dispositif selon l'une des revendications 10 à 17, **caractérisé en ce qu'**au moins une lèvre élastique transversale (48, 49) respective est agencée sur les côtés longitudinaux (47) en étant élastique en direction du côté longitudinal (47).

19. Dispositif selon la revendication 18, **caractérisé en ce que** les lèvres élastiques transversales (48, 49) s'étendent dans la même direction.

20. Dispositif selon la revendication 18, **caractérisé en ce que** les lèvres élastiques transversales (48, 49) s'étendent dans des directions opposées.

21. Dispositif selon l'une des revendications précédentes, **caractérisé en ce qu'**en supplément aux rainures (11, 21), chaque plaque (1, 2) présente un perçage (12, 22) et les perçages opposés (12, 22) sont refermés par une seule cheville (5).
